# EUROPÄISCHE PATENTSCHRIFT

(11) **EP 1 727 646 B1**
(45) Veröffentlichungstag und Bekanntmachung des Hinweises auf die Patenterteilung: **28.11.2007**
(21) Anmeldenummer: 05715768.7
(22) Anmeldetag: 05.03.2005
(51) Int. Cl.: B23Q 5/28, B23Q 1/58

(54) **TRÄGERANORDNUNG FÜR EIN MASCHINENPORTAL SOWIE VERFAHREN ZUR HERSTELLUNG EINER DERARTIGEN TRÄGERANORDNUNG**
SUPPORT ARRANGEMENT FOR A MACHINE PORTAL AND METHOD FOR PRODUCING A SUPPORT ARRANGEMENT OF THIS TYPE
ENSEMBLE SUPPORT POUR UN PORTAIL DE MACHINE ET PROCEDE DE PRODUCTION DE CELUI-CI

(30) Priorität: 11.03.2004 DE 102004011877
(43) Veröffentlichungstag der Anmeldung: 06.12.2006
(73) Patentinhaber: Trumpf Sachsen GmbH, 01904 Neukirch (DE)
(72) Erfinder: HARNISCH, Gunter, 01936 Königsbrück (DE)
(74) Vertreter: Kohler Schmid Möbus
(86) Internationale Anmeldenummer: PCT/EP2005/002348
(87) Internationale Veröffentlichungsnummer: WO 2005/087431

(56) Entgegenhaltungen:
- DE-A1- 4 321 969
- DE-A1- 19 643 518
- DE-A1- 19 958 375
- DE-U1- 29 705 152
- US-B1- 6 227 336

## Beschreibung

Die Erfindung betrifft eine Trägeranordnung für ein Maschinenportal, mit einem Leichtbauträger sowie mit einem Sekundärteil und einer Führungseinrichtung eines Linearantriebes, wobei Sekundärteilbasissegmente des Sekundärteils auf dem Leichtbauträger aufsitzen und wobei der Leichtbauträger einerseits und die Sekundärteilbasissegmente und/oder die Führungseinrichtung andererseits ein unterschiedliches Wärmeausdehnungsverhalten zeigen. Die Erfindung betrifft des Weiteren ein Verfahren zur Herstellung einer derartigen Trägeranordnung, wobei Sekundärteilbasissegmente eines Linearantriebes auf einen Leichtbauträger aufgeklebt werden.

Aus DE 297 05 152 U1 ist ein Bearbeitungszentrum mit einem auf Linearführungen laufenden Portal in Leichtbauweise bekannt. Dieses Portal besteht aus einem Leichtbau-Strebengerüst aus mit Leichtmetal-Muffen verbundenen Kohlefaserrohren bzw. aus Wabenmaterial. Der Antrieb des Portals und die Lagerung der Linearführungen werden nicht beschrieben.

Ein,Kunstharz-Rahmenwerk als Leichtbaukörper ist aus DE 43 21 969 A1 bekannt. Dieses Kunstharz-Rahmenwerk besteht aus einem Gitterteil und einem dieses Gitterteil umgebenden Rahmenteil, das eine Sandwich-Bauweise aufweist und eine Hautschicht sowie eine Kernschicht umfasst.

Vorrichtungen zur Krafteinleitung in Faserverbundstrukturen mit einer Verbindung zwischen zwei Elementen aus inkompatiblen Werkstoffen, d.h. aus Werkstoffen mit unterschiedlicher Wärmeausdehnung, sind in DE 196 45 467 A1 sowie in DE 199 58 375 A1 offenbart.

Eine Trägeranordnung sowie ein Herstellungsverfahren der eingangs genannten Art sind aus DE 196 43 518 A1 bekannt. Im Falle dieses Standes der Technik sind auf einem Leichtbaugrundkörper als magnetisierbare bzw. magnetische Bereiche eines Linearantriebes Weicheisenbleche aufgeklebt. Der Leichtbaugrundkörper ist als langgestreckter, ganz oder teilweise mit einem dämpfenden Füllstoff ausgefüllter Hohlkörper ausgeführt und besteht aus kohlefaserverstärktem Kunststoff. Auswirkungen der Verschiedenheit der Ausdehnungskoeffizienten des Leichtbaugrundkörpers einerseits und der Weicheisenbleche andererseits sollen durch Aufbringen einer möglichst dünnen Klebstoffschicht gering gehalten werden. Die Weicheisenbleche können sich jedoch unter der Wirkung von Temperaturschwankungen auf dem Leichtbaugrundkörper verschieben bzw. von dem Leichtbaugrundkörper ablösen.

Eine gattungsgemäße Trägeranordnung dahingehend weiterzubilden, dass eine große Formstabilität einer Führungseinrichtung in Form wenigstens einer Führungsschiene gewährleistet ist und ein Verfahren zur Herstellung einer derartigen Trägeranordnung bereitzustellen, hat sich die vorliegende Erfindung zum Ziel gesetzt.

Erfindungsgemäß wird diese Aufgabe vorrichtungsbezogen durch die Trägeranordnung nach Patentanspruch 1, verfahrensbezogen durch das Herstellungsverfahren gemäß Patentanspruch 10 gelöst.

Die Führungsschienen erfindungsgemäßer Trägeranordnungen sind demnach form- und kraftschlüssig an dem Leichtbauträger gelagert. An ihren Längsseiten werden sie an Abstufungen von Sekundärteilbasissegmenten des Linearantriebes abgestützt. Ungeachtet dieser Abstützung können die Führungsschienen ihre in Schienenlängsrichtung gemessene Länge unter der Wirkung von Temperaturschwankungen verändern. Eine derartige Längenänderung lassen die Dehnschrauben zu, mittels derer die Führungsschienen an dem zugehörigen Leichtbauträger befestigt sind. Die Geradheit der Führungsschienen bleibt somit auch bei Temperaturschwankungen gewahrt. Die Sekundärteilbasissegmente sind über Befestigungskörper, die in den Leichtbauträger eingreifen, mit dem Leichtbauträger verbunden. Zu diesem Zweck sind Befestigungsschrauben vorgesehen, welche in einen Befestigungskörper einzudrehen sind und dabei die Sekundärteilbasissegmente mit Abstand von deren Rändern durchsetzen. Auf diese Art und Weise ergibt sich zwischen dem Leichtbauträger und den Sekundärteilbasissegmenten eine auch bei Temperaturschwankungen dauerhafte und darüber hinaus lastaufnahmefähige Verbindung. Insbesondere ist diese Verbindung in der Lage, die im Betrieb des Linearantriebes auf die Sekundärteilbasissegmente wirkenden Kräfte abzutragen.

Das Herstellungsverfahren gemäß Patentanspruch 10 gewährleistet eine hochgenaue Montage der Führungsschienen erfindungsgemäßer Trägeranordnungen. In dieser Hinsicht von besonderem Vorteil ist der Umstand, dass die Gewinde für die Befestigungsschrauben der Sekundärteilbasissegmente erst dann in die betreffenden Befestigungskörper eingeschnitten und die Durchtrittsbohrungen für die Befestigungsschrauben an den Sekundärteilbasissegmenten erst dann erstellt werden, wenn die Sekundärteilbasissegmente ihre endgültige Lage an dem Leichtbauträger einnehmen. Der hochgenauen Ausrichtung der Führungsschienen dient es außerdem, dass die Abstufungen der Sekundärteilbasissegmente zur formschlüssigen Abstützung der Führungsschienen erst nach dem Aufkleben der Sekundärteilbasissegmente gefertigt werden.

Besondere Ausführungsarten der in Patentanspruch 1 beschriebenen Trägeranordnung ergeben sich aus den abhängigen Patentansprüchen 2 bis 9.

Eine besonders wirksame formschlüssige Verbindung zwischen den Sekundärteilbasissegmenten und dem Leichtbauträger ergibt sich, wenn die Befestigungsschrauben zur Befestigung der Sekundärteilbasissegmente mit einem Schraubenkopf sowohl in die betreffenden Sekundärteilbasissegmente als auch in die betreffenden Befestigungskörper formschlüssig eingreifen.

Angesichts der auftretenden Wärmedehnung empfiehlt es sich, die Befestigungsschrauben an den Sekundärteilbasissegmenten mittig anzuordnen. Die Befestigungsschrauben können in diesem Fall Festpunkte bei den an den Sekundärteilbasissegmenten temperaturbedingt auftretenden Maßänderungen bilden.

Zweckmäßigerweise sind die zur Lagerung der Führungsschiene(n) dienenden Abstufungen an den Sekundärteilbasissegmenten randseitig vorgesehen. Werden die Führungsschienen durch die Sekundärteilbasissegmente hindurch mit dem Leichtbauträger verbunden, so können die Dehnschrauben zur Führungsschienenbefestigung gleichzeitig zur Fixierung der Sekundärteilbasissegmente genutzt-werden. Ein radiales Spiel zwischen dem Schaft der Dehnschrauben zur Führungsschienenbefestigung und der betreffenden Durchtrittsöffnung an den Sekundärteilbasissegmenten erlaubt Bewegungen der Dehnschrauben relativ zu den Sekundärteilbasissegmenten insbesondere in Führungsschienenlängsrichtung. Derartige Bewegungen der Dehnschrauben treten bei temperaturbedingten Längenänderungen der Führungsschienen auf.

Als Leichtbauträger werden erfindungsgemäß insbesondere Kastenträger, vorzugsweise Kastenträger mit Wänden in Form von Sandwichstrukturen, verwendet. Derartige Leichtbauträger zeichnen sich-durch eine hohe Stabilität bei gleichzeitig ausgesprochen geringem Eigengewicht aus. Als Werkstoff für die in den Leichtbauträger eingreifenden Befestigungskörper und/oder für die Sekundärteilbasissegmente und/oder für die Führungsschienen wird Stahl bevorzugt. Die in den Leichtbauträger eingreifenden Befestigungskörper können abgestuft sein.

Im Falle einer bevorzugten Ausführungsform der Erfindung sind die Sekundärteilbasissegmente sowohl über Befestigungsschrauben als auch mittels einer Klebeverbindung an dem Leichtbauträger angebracht. Bei der Montage werden die Sekundärteilbasissegmente während des Aushärtens des zur Herstellung der Klebeverbindung verwendeten Klebstoffs mittels Schrauben vorläufig an dem Leichtbauträger fixiert. Die Schrauben zur vorläufigen Fixierung der Sekundärteilbasissegmente durchsetzen dabei Durchtrittsbohrungen, durch die später Dehnschrauben zur Führungsschienenbefestigung an dem Leichtbauträger eingedreht werden.

Nachstehend wird die Erfindung anhand einer schematischen Darstellung eines Ausführungsbeispiels näher erläutert.

Dargestellt ist eine Trägeranordnung 1 kurz vor Beendigung ihrer Montage. Die Trägeranordnung 1 ist als Teil eines Portals einer Laserflachbettmaschine vorgesehen. Sie umfasst einen Leichtbauträger 2, der als Kastenträger mit Wänden in Form von Sandwichstrukturen ausgebildet ist. Die Sandwichstrukturen umfassen außen liegende Carbon-Faser-Kunststoff-Deckschichten (CFK-Deckschichten) 3 sowie nicht im Einzelnen gezeigtes Aluminium-Wabenmaterial.

Auf der außen liegenden CFK-Deckschicht 3 sind senkrecht zu der Zeichenebene hintereinander liegende Stahlsegmente 4 aufgeklebt. Diese bilden Sekundärteilbasissegmente eines nicht im Detail dargestellten Linearantriebes. An ihrer zu dem Leichtbauträger 2 hin liegenden Unterseite sind die Stahlsegmente 4 mit Nuten 5 versehen, die ihrerseits Kühlrohre 6 aufnehmen. Alternativ können die Kühlrohre 6 auf der Oberseite der Stahlsegmente 4 angeordnet und dann beispielsweise mittels Rohrschellen befestigt sein. Bohrungen 7 des Leichtbauträgers 2 fluchten mit Bohrungen 8 an mit Abstufungen 9 versehenen Längsrändern der Stahlsegmente 4.

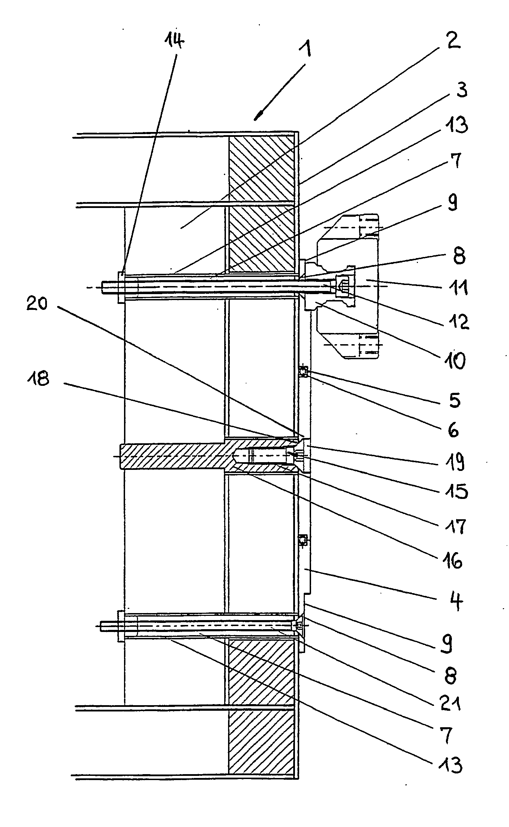

An den in der Abbildung obenliegenden Abstufungen 9 der Stahlsegmente 4 ist eine gleichfalls aus Stahl gefertigte Führungsschiene 10 des Linearantriebes abgestützt. Die Führungsschiene 10 lagert einen Führungswagen 11, der einen Bearbeitungskopf, im gezeigten Beispielsfall einen Laserbearbeitungskopf tragen. kann. Zur Befestigung der Führungsschiene 10 dienen Dehnschrauben 12, welche Durchtrittsbohrungen an der Führungsschiene 10. sowie die Bohrungen 8 der Stahlsegmente 4 und die Bohrungen 7 an dem Leichtbauträger 2 durchsetzen. Die Bohrungen 7 an dem Leichtbauträger 2 sind mit CFK-Hülsen 13 verkleidet. In den CFK-Hülsen 13 verläuft der Schaft der Dehnschrauben 12 mit radialem Spiel. Ein radiales Spiel besteht außerdem zwischen dem Schaft der Dehnschrauben 12 und der Wand der Bohrungen 8 an den Längsrändern der Stahlsegmente 4. An dem von der Führungsschiene 10 abliegenden Ende der CFK-Hülsen 13 sind die Dehnschrauben 12 über eine Mutter 14 abgestützt. Infolge des zwischen dem Schaft der Dehnschrauben 12 und den CFK-Hülsen 13 sowie der Wandung der Bohrungen 8 an den Stahlsegmenten 4 bestehenden radialen Spiels können die Dehnschrauben 12 beispielsweise unter der Wirkung von Temperaturschwankungen relativ zu dem Leichtbauträger 2 ausgelenkt werden. Die Mutter 14 bildet dabei ein Widerlager für die Schwenkbewegung der Dehnschrauben 12.

Mittig zwischen ihren Längsrändern sind die Stahlsegmente 4 über zwei stählerne Befestigungsschrauben 15 mit dem Leichtbauträger 2 verbunden. Von den Befestigungsschrauben 15 des dargestellten Stahlsegmentes 4 ist in der Abbildung lediglich eine zu erkennen.

Die Befestigungsschrauben 15 greifen in abgestufte Befestigungskörper ein, die ihrerseits als Stahlkerne 16 ausgeführt sind. Die Stahlkerne 16 werden von abgestuften Bohrungen des Leichtbauträgers 2 aufgenommen und durchsetzen dabei nach Art einer Verstiftung sowohl die CFK-Deckschichten 3 als auch die Aluminium-Wabenstruktur des Leichtbauträgers 2. Zur spielfreien Fixierung der Stahlkerne 16 an dem Leichtbauträger 2 dienen CFK-Hülsenverbindungen, wie sie beispielsweise in DE 196 45 467 A1 beschrieben sind. Der Schaft der Befestigungsschrauben 15 wird in eine Gewindebohrung 17 des zugehörigen Stahlkerns 16 eingedreht. Die Gewindebohrungen 17 sind als Sackbohrungen ausgeführt und gehen an ihrer zu den Stahlsegmenten 4 hin weisenden Seite in eine konische Senkung 18 über. An der konischen Senkung 18 stützen sich die als Senkkopfschrauben ausgebildeten Befestigungsschrauben 15 mit einem gleichfalls konischen Schraubenkopf 19 formschlüssig ab. Eine formschlüssige Verbindung besteht weiterhin zwischen dem Schraubenkopf 19 der Befestigungsschrauben 15 und der Wand von Durchtrittsbohrungen 20 an den Stahlsegmenten 4.

Unterhalb des Stahlkerns 16 sind in der Abbildung eine Bohrung 7 an dem Leichtbauträger 2 und eine Bohrung 8 an dem Stahlsegment 4 gezeigt, die von einer Senkkopfschraube 21 durchsetzt werden. Senkkopfschrauben 21 dienen zur vorläufigen Fixierung der Stahlsegmente 4 für die Dauer des Aushärtens eines Klebstoffs zwischen dem Leichtbauträger 2 und den Stahlsegmenten 4. Die in der gezeigten Montagephase Senkkopfschrauben 21 aufnehmenden Bohrungen 7, 8 dienen letztlich zur Aufnahme von Dehnschrauben 12 zur Befestigung einer weiteren Führungsschiene 10. Der ein Widerlager für die Senkkopfschrauben 21 bildende Längsrand der Stahlsegmente 4 ist mit einer Abstufung 9 zur formschlüssigen Lagerung der weiteren Führungsschiene 10 versehen.

Zur Montage der Trägeranordnung 1 werden zunächst Rohlinge der Stahlsegmente 4 nach dem Auftragen von Klebstoff auf die CFK-Deckschicht 3 des Leichtbauträgers 2 aufgelegt. Die Rohlinge der Stahlsegmente 4 sind mit Durchtrittsbohrungen versehen, deren Durchmesser sich nahe dem Leichtbauträger 2 unter Ausbildung einer Senkung verringert. Durch diese Durchtrittsbohrungen hindurch werden Senkkopfschrauben 21 an dem Leichtbauträger 2 fixiert und dadurch die Rohlinge der Stahlsegmente 4 an dem Leichtbauträger 2 bis zum Aushärten des Klebstoffs befestigt. Der konische Schraubenkopf der in den Leichtbauträger 2 eingedrehten Senkkopfschrauben 21 liegt dicht an der gleichfalls konischen Wand der Bohrung 8 an den Stahlsegmenten 4 an. Neben einer wirksamen formschlüssigen Verbindung ergibt sich dadurch ein dichter Abschluss zu dem Innern des Leichtbauträgers 2 hin. Das Eindringen etwa von Kühlflüssigkeit, Schmiermittel oder Metallspänen in das Innere des Leichtbauträgers 2 wird auf diese Art und Weise verhindert.

Noch während des Aushärtens des Klebstoffs werden an den Stahlsegmenten 4 die mittigen, mit einer Senkung versehenen Durchtrittsbohrungen 20 und an dem Stahlkern 16 die Gewindebohrungen 17 mit den Senkungen 18 erstellt. Die sacklochartige Gestaltung der Gewindebohrungen 17 verhindert dabei ein Eindringen beispielsweise von Kühlflüssigkeit und/oder Metallspänen in das Innere des Leichtbauträgers 2.

Nach dem Eindrehen der Befestigungsschrauben 15 und dem Aushärten des Klebstoffs werden bei nach wie vor eingedrehten Senkkopfschrauben 21 die Abstufungen 9 in die Längsränder der Stahlsegmente 4 eingeschnitten. Der zwischen den Abstufungen 9 gelegene Bereich wird durch einen geringfügigen Materialabtrag geebnet. Anschließend werden die in der Abbildung der Einfachheit halber nicht gezeigten Permanentmagnete des Sekundärteils des Linearantriebs auf die Stahlsegmente aufgeklebt.

Abschließend werden die Senkkopfschrauben 21 entfernt und die Führungsschienen 10 an den Abstufungen 9 der Stahlsegmente 4 angesetzt und mittels Dehnschrauben 12 an dem Leichtbauträger 2 befestigt. Die Abbildung zeigt den Montagezustand der Trägeranordnung 1 vor Anbringen der zweiten Führungsschiene 10.

## Patentansprüche

1. Trägeranordnung für ein Maschinenportal, mit einem Leichtbauträger (2) sowie, mit einem Sekundärteil und einer Führungseinrichtung eines Linearantriebes, wobei Sekundärteilbasissegmente (4) des Sekundärteils auf dem Leichtbauträger (2) aufsitzen und wobei der Leichtbauträger (2) einerseits und die Sekundärteilbasissegmente (4) andererseits ein unterschiedliches Wärmeausdehnungsverhalten zeigen, **dadurch gekennzeichnet, dass** die Sekundärteilbasissegmente (4) des Linearantriebes mit Abstand von ihren Rändern mittels wenigstens einer Befestigungsschraube (15) an zumindest einem in den Leichtbauträger (2) eingreifenden Befestigungskörper (16) befestigt sind und dass die Sekundärteilbasissegmente (4) wenigstens eine Abstufung (9) aufweisen, an der sie eine Führungseinrichtung in Form zumindest einer Führungsschiene (10) an der Führungsschienenlängsseite formschlüssig lagern, wobei die Führungsschiene (10) mittels wenigstens einer Dehnschraube (12) an dem Leichtbauträger (2) befestigt ist und gleichfalls ein anderes Wärmeausdehnungsverhalten zeigt als der Leichtbauträger (2).

2. Trägeranordnung nach Anspruch 1, **dadurch gekennzeichnet, dass** wenigstens eine Befestigungsschraube (15) zur Befestigung eines Sekundärteilbasissegmentes (4) mit einem Schraubenkopf (19) sowohl in das betreffende Sekundärteilbasissegment (4) als auch in einen Befestigungskörper (16) formschlüssig eingreift.

3. Trägeranordnung nach einem der vorhergehenden Ansprüche, **dadurch gekennzeichnet, dass** wenigstens eine Befestigungsschraube (15) zur Befestigung eines Sekundärteilbasissegmentes (4) mittig bezüglich zumindest zweier einander gegenüberliegender Ränder des betreffenden Sekundärteilbasissegmentes (4) angeordnet ist.

4. Trägeranordnung nach einem der vorhergehenden Ansprüche, **dadurch gekennzeichnet, dass** die Sekundärteilbasissegmente (4) eine Abstufung (9) an wenigstens einem in Führungsschienenlängsrichtung verlaufenden Rand aufweisen.

5. Trägeranordnung nach einem der vorhergehenden Ansprüche, **dadurch gekennzeichnet, dass** wenigstens eine Dehnschraube (12) zur Führungsschienenbefestigung ein Sekundärteilbasissegment (4) vorzugsweise mit radialem Spiel durchsetzt.

6. Trägeranordnung nach einem der vorhergehenden Ansprüche, **dadurch gekennzeichnet, dass** wenigstens eine Dehnschraube (12) zur Führungsschienenbefestigung ein Sekundärteilbasissegment (4) an einer Abstufung (9) durchsetzt.

7. Trägeranordnung nach einem der vorhergehenden Ansprüche, **dadurch gekennzeichnet, dass** der Leichtbauträger (2) als Kastenträger, vorzugsweise als Kastenträger mit Wänden in Form von Sandwichstrukturen, ausgebildet ist.

8. Trägeranordnung nach einem der vorhergehenden Ansprüche, **dadurch gekennzeichnet, dass** wenigstens ein in den Leichtbauträger (2) eingreifender Befestigungskörper (16) als aus dem Vollen gefertigter Stahlkörper und/oder dass wenigstens ein Sekundärteilbasissegment (4) als Stahlsegment und/oder dass wenigstens eine Führungsschiene (10) als Stahlschiene ausgebildet ist.

9. Trägeranordnung nach einem der vorhergehenden Ansprüche, **dadurch gekennzeichnet, dass** wenigstens ein Sekundärteilbasissegment (4) auf den Leichtbauträger (2) aufgeklebt ist und dass durch wenigstens eine an dem Sekundärteilbasissegment (4) vorgesehene Bohrung (8) für eine Dehnschraube (12) zur Führungsschienenbefestigung eine Schraube (21) an dem Leichtbauträger (2) einschraubbar ist zur Halterung des Sekundärteilbasissegmentes (4) bis zum Aushärten des Klebstoffs.

10. Verfahren zur Herstellung einer Trägeranordnung (1) für ein Maschinenportal, wobei Sekundärteilbasissegmente (4) eines Linearantriebes auf einen Leichtbauträger (2) aufgeklebt werden, **dadurch gekennzeichnet, dass**
- Befestigungskörper (16) in den Leichtbauträger (2) eingebracht und mit dem Leichtbauträger (2) verbunden werden,
- Befestigungskörper (16) und auf den Leichtbauträger (2) aufgeklebte Sekundärteilbasissegmente relativ zueinander derart positioniert werden, dass die Befestigungskörper (16) mit Abstand von den Rändern der Sekundärteilbasissegmente (4) zu liegen kommen,
- an den aufgeklebten Sekundärteilbasissegmenten (4) Durchtrittsbohrungen (20) und an den von den aufgeklebten Sekundärteilbasissegmenten (4) überdeckten Befestigungskörpern (16) Gewindebohrungen (17) für Befestigungsschrauben (15) erstellt und durch die Durchtrittsbohrungen (20) an den Sekundärteilbasissegmenten (4) Befestigungsschrauben (15) in die Gewindebohrungen (17) an den Befestigungskörpern (16) zur Befestigung der Sekundärteilbasissegmente (4) eingedreht werden,
- an den Rändern der Sekundärteilbasissegmente (4) Abstufungen (9) erstellt werden und
- wenigstens eine Führungsschiene (10) an Abstufungen (9) der Sekundärteilbasissegmente (4) zur Anlage gebracht und mittels Dehnschrauben (12) an dem Leichtbauträger (2) verschraubt wird.

## Claims

1. Support arrangement for a machine portal, comprising a light-weight-structure support (2) and comprising a secondary part and a guide device of a linear drive, wherein secondary part base segments (4) of the secondary part are seated on the light-weight-structure support (2) and wherein the light-weight-structure support (2), on the one hand, and the secondary part base segments (4), on the other hand, exhibit a differing thermal expansion behaviour, **characterised in that** the secondary part base segments (4) of the linear drive are fastened, at a distance from their edges, by means of at least one fastening screw (15), to at least one fastening element (16) extending into the light-weight-structure support (2), and the secondary part base segments (4) have at least one shoulder (9) on which they support a guide device in the form of at least one guide rail (10) in a positive fit at the longitudinal side of the guide rail, the guide rail (10) being fastened to the light-weight-structure support (2) by means of at least one necked-down bolt and likewise exhibiting a different thermal expansion behaviour from that of the light-weight-structure support (2).

2. Support arrangement according to claim 1, **characterised in that** at least one fastening screw (15) for fastening a secondary part base segment (4) engages by a screw head (19) in a positive fit both in the relevant secondary part base segment (4) and in a fastening element (16).

3. Support arrangement according to either of the preceding claims, **characterised in that** at least one fastening screw (15) for fastening a secondary part base segment (4) is disposed centrally with respect to at least two mutually opposite edges of the relevant secondary part base segment (4).

4. Support arrangement according to any one of the preceding claims, **characterised in that** the secondary part base segments (4) have a shoulder (9) at at least one edge extending in the longitudinal direction of the guide rail.

5. Support arrangement according to any one of the preceding claims, **characterised in that** at least one necked-down bolt (12) for fastening the guide rail passes through a secondary part base segment (4) preferably with radial clearance.

6. Support arrangement according to any one of the preceding claims, **characterised in that** at least one necked-down bolt (12) for fastening the guide rail passes through a secondary part base segment (4) at a shoulder (9).

7. Support arrangement according to any one of the preceding claims, **characterised in that** the light-weight-structure support (2) is in the form of a box-type support, preferably a box-type support having walls in the form of sandwich structures.

8. Support arrangement according to any one of the preceding claims, **characterised in that** at least one fastening element (16) extending into the light-weight-structure support (2) is in the form of a solid steel element and/or at least one secondary part base segment (4) is in the form of a steel segment and/or at least one guide rail (10) is in the form of a steel rail.

9. Support arrangement according to any one of the preceding claims, **characterised in that** at least one secondary part base segment (4) is adhesively fastened to the light-weight-structure support (2), and, in order to hold the secondary part base segment (4) in place until the adhesive has cured, a screw (21) may be screwed into the light-weight-structure support (2) through at least one bore (8) provided in the secondary part base segment (4) for a necked-down bolt (12) for fastening the guide rail.

10. Method for the production of a support arrangement (1) for a machine portal, wherein secondary part base segments (4) of a linear drive are adhesively fastened to a light-weight-structure support (2), **characterised in that**
- fastening elements (16) are introduced into the light-weight-structure support (2) and connected to the light-weight-structure support (2),
- fastening elements (16), and secondary part base segments adhesively fastened to the light-weight-structure support (2) are positioned relative to each other in such a manner that the fastening elements (16) come to lie at a distance from the edges of the secondary part base segments (4),
- passage bores (20) are made in the adhesively fastened secondary part base segments (4), and threaded bores (17) for fastening screws (15) are made in the fastening elements (16) covered by the adhesively fastened secondary part base segments (4), and fastening screws (15) are screwed through the passage bores (20) in the secondary part base segments (4) and into the threaded bores (17) in the fastening elements (16) in order to fasten the secondary part base segments (4),
- shoulders (9) are made at the edges of the secondary part base segments (4), and
- at least one guide rail (10) is brought into contact with shoulders (9) of the secondary part base segments (4) and is screwed to the light-weight-structure support (2) by means of necked-down bolts (12).

## Revendications

1. Ensemble porteur pour un portique de machine, avec un élément porteur (2) en construction légère ainsi qu'avec une partie secondaire et un dispositif de guidage d'un entraînement linéaire, sachant que des segments de base (4) de la partie secondaire reposent sur l'élément porteur (2) en construction légère et sachant que l'élément porteur (2) en construction légère d'une part et les segments de base (4) de partie secondaire d'autre part présentent un comportement de dilatation thermique différent, **caractérisé en ce que** les segments de base (4) de partie secondaire de l'entraînezncnt linéaire sont fixés à distance de leurs bords, à l'aide d'au moins une vis de fixation (15) sur au moins un corps de fixation (16) s'engageant dans l'élément porteur (2) en construction légère, et **en ce que** les segments de base (4) de partie secondaire présentent au moins un gradin (9) sur lequel ils reçoivent un dispositif de guidage sous la forme d'au moins un rail de guidage (10) par engagement positif sur le côté longitudinal du rail de guidage, sachant que le rail de guidage (10) est fixé à l'aide d'au moins une vis expansible (12) sur l'élément porteur (2) en construction légère et présente lui aussi un comportement de dilatation thermique différent de celui de l'élément porteur (2) en construction légère.

2. Ensemble porteur selon la revendication 1, **caractérisé en ce qu'**au moins une vis de fixation (15) pour la fixation d'un segment de base (4) de partie secondaire s'engage positivement par une tête de vis (19) tant dans le segment de base concerné (4) de partie secondaire que dans un corps de fixation (16).

3. Ensemble porteur selon l'une des revendications précédentes, **caractérisé en ce qu'**au moins une vis de fixation (15) pour la fixation d'un segment de base (4) de partie secondaire est disposée centralement relativement à au moins deux bords mutuellement opposés du segment de base concerné (4) de partie secondaire.

4. Ensemble porteur selon l'une des revendications précédentes, **caractérisé en ce que** les segments de base (4) de partie secondaire présentent un gradin (9) sur au moins un bord s'étendant dans la direction longitudinale du rail de guidage.

5. Ensemble porteur selon l'une des revendications précédentes, **caractérisé en ce qu'**au moins une vis expansible (12) pour la fixation du rail de guidage traverse un segment de base (4) de partie secondaire de préférence avec un jeu radial.

6. Ensemble porteur selon l'une des revendications précédentes, **caractérisé en ce qu'**au moins une vis expansible (12) pour la fixation du rail de guidage traverse un segment de base (4) de partie secondaire au niveau d'un gradin (9).

7. Ensemble porteur selon l'une des revendications précédentes,
**caractérisé en ce que** l'élément porteur (2) en construction légère est réalisé sous forme d'élément porteur en caisson, de préférence sous forme d'élément porteur en caisson avec des parois sous la forme de structures sandwich.

8. Ensemble porteur selon l'une des revendications précédentes, **caractérisé en ce qu'**au moins un corps de fixation (16) s'engageant dans l'élément porteur (2) en construction légère est réalisé sous la forme d'un corps en acier fabriqué dans du matériau plein, et/ou **en ce qu'**au moins un segment de base (4) de partie secondaire est réalisé sous forme de segment en acier, et/ou **en ce qu'**au moins un rail de guidage (10) est réalisé sous forme de rail en acier.

9. Ensemble porteur selon l'une des revendications précédentes, **caractérisé en ce qu'**au moins un segment de base (4) de partie secondaire est collé sur l'élément porteur (2) en construction légère, et **en ce qu'**une vis (21) peut, à travers au moins un perçage (8) prévu sur le segment de base (4) de partie secondaire pour une vis expansible (12) destinée à la fixation du rail de guidage, être vissée sur l'élément porteur (2) en construction légère afin de maintenir le segment de base (4) de partie secondaire jusqu'au durcissement de la colle.

10. Procédé de fabrication d'un ensemble porteur (1) pour un portique de machine, dans lequel des segments de base (4) de partie secondaire d'un entraînement linéaire sont collés sur un élément porteur (2) en construction légère, **caractérisé en ce que**
- des corps de fixation (16) sont introduits dans l'élément porteur (2) en construction légère et assemblés à l'élément porteur (2) en construction légère,
- des corps de fixation (16) et des segments de base de partie secondaire collés sur l'élément porteur (2) en construction légère sont positionnés les uns par rapport aux autres de telle sorte que les corps de fixation (16) viennent se placer à distance des bords des segments de base (4) de partie secondaire,
- on pratique pour des vis de fixation (15) des perçages traversants (20) dans les segments de base collés (4) de partie secondaire et des perçages filetés (17) dans les corps de fixation (16) recouverts par les segments de base collés (4) de partie secondaire, et, à travers les perçages traversants (20) des segments de base (4) de partie secondaire, des vis de fixation (15) sont vissées dans les perçages filetés (17) des corps de fixation (16) pour fixer les segments de base (4) de partie secondaire,
- des gradins (9) sont réalisés sur les bords des segments de base (4) de partie secondaire, et
- au moins un rail de guidage (10) est amené en application contre des gradins (9) des segments de base (4) de partie secondaire et est assemblé par vissage à l'élément porteur (2) en construction légère au moyen de vis expansibles (12).
